# EUROPÄISCHE PATENTSCHRIFT

(11) **EP 3 209 528 B1**
(45) Veröffentlichungstag und Bekanntmachung des Hinweises auf die Patenterteilung: **27.02.2019**
(21) Anmeldenummer: 15785070.2
(22) Anmeldetag: 15.10.2015
(51) Int. Cl.: B60S 1/34, B60S 1/38

(54) **VERSTELLMECHANISMUS, INSBESONDERE VERKIPPMECHANISMUS, FÜR EINE WISCHERANLAGE SOWIE WISCHERANLAGE ODER SCHEIBENWISCHEINRICHTUNG**
ADJUSTMENT MECHANISM, IN PARTICULAR TILTING MECHANISM, FOR A WIPER SYSTEM, AND WIPER SYSTEM OR WINDSCREEN WIPER DEVICE
MÉCANISME DE DÉPLACEMENT, EN PARTICULIER MÉCANISME DE BASCULEMENT, DESTINÉ À UN SYSTÈME D'ESSUYAGE, ET SYSTÈME D'ESSUYAGE OU DISPOSITIF D'ESSUIE-GLACE

(30) Priorität: 22.10.2014 DE 102014221416
(43) Veröffentlichungstag der Anmeldung: 30.08.2017
(73) Patentinhaber: Robert Bosch GmbH, 70442 Stuttgart (DE)
(72) Erfinder: WEILER, Michael, 77815 Buehl (DE); DEAK, Peter, H-1188 Budapest (HU); HACKL, Viktor, H-9400 Sopron (HU)
(86) Internationale Anmeldenummer: PCT/EP2015/073837
(87) Internationale Veröffentlichungsnummer: WO 2016/062599

(56) Entgegenhaltungen:
- DE-C- 665 375
- FR-A- 879 299
- FR-A1- 2 890 922
- US-A- 3 026 555

## Beschreibung

Die Erfindung betrifft einen Verstellmechanismus, insbesondere einen Verkippmechanismus, für eine Wischeranlage oder Scheibenwischeinrichtung eines Fortbewegungsmittels oder Fahrzeugs, insbesondere für eine Heck- oder Windschutzscheibe eines Kraftfahrzeugs. Ferner betrifft die Erfindung eine Wischeranlage oder eine Scheibenwischeinrichtung für ein Fortbewegungsmittel oder ein Fahrzeug, insbesondere für eine Heck- oder Windschutzscheibe eines Kraftfahrzeugs.

### Stand der Technik

Eine klare Sicht eines Kraftfahrzeugführers ist eine wichtige Voraussetzung für eine aktive und passive Sicherheit im Straßenverkehr. An eine moderne Scheibenwischeinrichtung für ein Fahrzeug, z. B. eine Heckscheiben- oder eine Windschutzscheiben-Wischeinrichtung für ein Kraftfahrzeug, mit einem Wischerantrieb und einem Scheibenwischer und/oder einer Scheibenwischvorrichtung werden daher hohe Anforderungen gestellt. Dies betrifft z. B. eine hohe Wischqualität, eine gute Wischleistung an einem jedem erreichbaren Punkt einer Scheibe des Fahrzeugs sowie eine lange Lebensdauer, wodurch eine freie Sicht in kritischen Situationen bei Regen, Spritzwasser, Nebel, Schnee etc. erreichet werden kann. Der Wischerantrieb treibt z. B. mittels eines Elektromotors, eines Getriebes und/ oder einer mechanischen Übertragungseinrichtung ein oder eine Mehrzahl von Scheibenwischern des Fahrzeugs an.

Insbesondere auf Scheiben mit vergleichsweise starken Krümmungsänderungen und/oder vergleichsweise großen Wischwinkeln kann der Scheibenwischer bzw. das Wischblatt seinen Kontakt zur Scheibe verlieren. Hierdurch kann es, insbesondere bei einer vergleichsweise stark gekrümmten Scheibe zu einer Schleierbildung und/oder zu nicht wischbaren Bereichen auf der Scheibe kommen. Da ein Wischvorgang auf eine Vielzahl von Parametern hin ausgelegt werden muss, wie z. B. eine Regenmenge auf der Scheibe, eine eventuell auftretende Schneelast, eine Geschwindigkeit des Fahrzeugs und damit einhergehender Winddruck auf den Scheibenwischer bzw. das Wischblatt, kann eine Schleierbildung nicht auf einfache Weise durch Anpassung des Drucks des Scheibenwischers bzw. des Wischblatts auf die Scheibe zuverlässig verhindert werden. Diese Problematik gilt in verschärfter Form für ggf. nicht wischbare Bereiche auf der Scheibe.
Daher ist es ein Bedürfnis, Scheibenwischeinrichtungen, insbesondere für Kraftfahrzeuge, immer weiter zu verbessern. Für eine Verbesserung gibt es eine Vielzahl von Randbedingungen, welche gleichzeitig berücksichtigt werden sollten. Zu diesen gehören ein Aufwand bei deren Herstellung bzw. die Herstellungskosten, die Materialkosten, aber auch die Eigenschaften der betreffenden Scheibenwischeinrichtung, insbesondere deren Funktion unter vielfältigen Bedingungen sowie deren Langlebigkeit unter einer Vielzahl von Eisatzbedingungen. Es gilt bei Scheibenwischeinrichtungen für Fahrzeuge ferner zu berücksichtigen, dass ein Kostendruck stetig steigt, und dass die Fahrzeuge in einer Vielzahl von klimatischen Bedingungen zum Einsatz kommen können, sodass z. B. extreme Temperaturwerte dauerhaft auftreten und/oder großen Schwankungen unterworfen sind. Dies gilt auch für moderne Scheibenwischer, welche nach dem Fin-Ray-prinzip funktionieren. FR-A-2890922 offenbart den Oberbegriff des Anspruchs 1.

### Aufgabenstellung

Es ist eine Aufgabe der Erfindung, eine verbesserte Wischeranlage oder eine verbesserte Scheibenwischeinrichtung für ein Fortbewegungsmittel oder ein Fahrzeug, insbesondere für eine Heck- oder eine Windschutzscheibe eines Kraftfahrzeugs, anzugeben. Hierbei soll eine Wischleistung mittels eines Scheibenwischers, insbesondere eines Fin-Ray-Scheibenwischers, der Wischeranlage bzw. der Scheibenwischeinrichtung verbessert sein, wobei insbesondere eine Schleierbildung auf einer Scheibe verringert sein soll. Ferner sollen die mittels des Scheibenwischers auf der Scheibe nicht wischbaren Bereiche reduziert sein.

### Offenbarung der Erfindung

Die Aufgabe der Erfindung ist mittels eines Verstellmechanismus, insbesondere eines Verkippmechanismus, für eine Wischeranlage oder Scheibenwischeinrichtung eines Fortbewegungsmittels oder Fahrzeugs, insbesondere für eine Heck- oder Windschutzscheibe eines Kraftfahrzeugs, gemäß Anspruch 1; und mittels einer Wischeranlage oder einer Scheibenwischeinrichtung für ein Fortbewegungsmittel oder ein Fahrzeug, insbesondere für eine Heck- oder Windschutzscheibe eines Kraftfahrzeugs, gemäß Anspruch 10 gelöst. Vorteilhafte Weiterbildungen, zusätzliche Merkmale und/oder Vorteile der Erfindung ergeben sich aus den abhängigen Ansprüchen und der folgenden Beschreibung.
Der erfindungsgemäße Verstellmechanismus, insbesondere der erfindungsgemäße Verkippmechanismus, weist einen von einem Antriebszapfen antreibbaren Scheibenwischer auf, wobei der Verstellmechanismus, insbesondere der Verkippmechanismus, in einem verbauten Zustand des Scheibenwischers zwischen dem Antriebszapfen und dem Scheibenwischer eingerichtet ist, und mittels des Verstellmechanismus, insbesondere des Verkippmechanismus, auf einer Scheibe ein Nickwinkel des Scheibenwischers einstellbar ist. Die erfindungsgemäße Wischeranlage oder die erfindungsgemäße Scheibenwischeinrichtung weist einen erfindungsgemäße Verstellmechanismus, insbesondere einen erfindungsgemäße Verkippmechanismus, auf. Bevorzugt ist der Scheibenwischer als ein Fin-Ray-Scheibenwischer ausgebildet.
Der Scheibenwischer kann ein Wischerblatt, einen Wischerarm und/oder einen Wischhebel umfassen. Des Weiteren kann der Scheibenwischer als ein mit einem Wischerblatt kombinierter Wischhebel bzw. Wischerarm ausgebildet sein. Der Verstellmechanismus, insbesondere der Verkippmechanismus, dient gemäß der Erfindung als eine Befestigung des Scheibenwischers an/auf dem Antriebszapfen. Der Verstellmechanismus, insbesondere der Verkippmechanismus, weist bevorzugt ein Getriebe, insbesondere ein Kurvengetriebe oder ein Kulissengetriebe, auf, mittels welchem in Abhängigkeit eines Wischwinkels des Scheibenwischers eine Nickbewegung des Scheibenwischers auf der Scheibe durchführbar ist. Die Nicklagerung und/oder die Betätigungslagerung können als eine Zapfenlagerung, eine Snap-fit-Lagerung, eine Schnapplagerung oder ein Filmscharnier etc. ausgebildet sein.

Der Verstellmechanismus, insbesondere der Verkippmechanismus, kann eine Nicklagerung aufweisen, mittels welcher die Nickbewegung des Scheibenwischers auf der Scheibe durchführbar ist. Hierbei kann die Nicklagerung in Abhängigkeit des Wischwinkels mit dem Scheibenwischer mitbewegbar ausgebildet sein und die Nicklagerung ein Lager am/im Scheibenwischer und ein Gegenlager an/in einem Betätigungselement des Scheibenwischers aufweisen. Bevorzugt weist die Nicklagerung ein Lager, insbesondere einen Zapfen, am/im Scheibenwischer und ein Gegenlager, insbesondere eine Lagerschale, am/im Betätigungselement auf.

Der Verstellmechanismus, insbesondere der Verkippmechanismus, weist eine Betätigungslagerung auf, mittels welcher die Nickbewegung des Scheibenwischers auf der Scheibe durchführbar ist. Hierbei ist die Betätigungslagerung in Abhängigkeit des Wischwinkels mit dem Scheibenwischer mitbewegbar ausgebildet und die Betätigungslagerung weist ein Lager am/im Scheibenwischer und ein Gegenlager an/in einem Nickelement des Scheibenwischers auf. Bevorzugt weist die Betätigungslagerung ein Lager, insbesondere einen Zapfen, am/im Scheibenwischer und ein Gegenlager, insbesondere eine Lagerschale, am/im Nickelement auf.
Gemäß der Erfindung ist die Nickbewegung des Scheibenwischers mittels der Betätigungslagerung in einem Zusammenwirken mit der Nicklagerung durchführbar. Hierdurch ist der Scheibenwischer mittels des Nickelements gegenüber dem Betätigungselement verschwenkbar, wobei der Scheibenwischer in eine Richtung auf die Scheibe zubewegbar und in eine entgegengesetzte Richtung wieder zurückbewegbar ist. Der Verstellmechanismus, insbesondere der Verkippmechanismus, kann dabei eine mit dem Nickelement zusammenwirkbare Kurvenscheibe mit einer Betätigungsbahn für das Nickelement aufweisen, wobei in einem Betrieb des Scheibenwischers durch ein Abtasten der Betätigungsbahn mittels des Nickelements, insbesondere mittels einer Abtastfläche des Nickelements, die Nickbewegung in den Scheibenwischer einbringbar ist. Mittels der Betätigungsbahn ist das Nickelement auf- und abbewegbar.

In Ausführungsformen der Erfindung kann die Kurvenscheibe wenigstens für einen Bereich eines maximalen Wischwinkels des Scheibenwischers einen Kragen aufweisen, welcher an seinem freien Ende die Betätigungsbahn für das Nickelement aufweist. Ferner kann die Kurvenscheibe derart ausgestaltet sein, dass die Kurvenscheibe einerseits auf dem Antriebszapfen und drehbar gegenüber dem Antriebszapfen vorsehbar und/oder andererseits drehfest mit dem Fortbewegungsmittel oder Fahrzeug verbindbar ist. Hierbei kann der Antriebszapfen als ein Abschnitt, insbesondere ein Längsendabschnitt, einer Welle ausgebildet sein. Ferner ist es bevorzugt, dass das Betätigungselement mit dem Antriebszapfen drehfest und/oder axialfest verbindbar ist. Des Weiteren kann zwischen dem Scheibenwischer und dem Betätigungselement eine Feder, insbesondere eine Zugfeder, vorgesehen sein.

### Kurzbeschreibung der Zeichnung

Die Erfindung ist im Folgenden anhand von Ausführungsbeispielen einer Variante unter Bezugnahme auf die beigefügte schematische und nicht maßstabsgetreue Zeichnung näher erläutert. Elemente, Bauteile oder Komponenten, welche eine identische, univoke oder analoge Ausbildung und/oder Funktion besitzen, sind in der Figurenbeschreibung und in den Patentansprüchen mit denselben Bezugszeichen versehen und in den Figuren der Zeichnung mit denselben Bezugszeichen gekennzeichnet.

Sämtliche erläuterten Merkmale sind nicht nur in der angegebenen Kombination bzw. den angegebenen Kombinationen, sondern auch in einer anderen Kombination bzw. anderen Kombinationen oder in Alleinstellung anwendbar. Insbesondere ist es möglich, anhand der Bezugszeichen und den diesen zugeordneten Merkmalen in der Beschreibung der Erfindung und/oder der Figurenbeschreibung ein Merkmal oder eine Mehrzahl von Merkmalen in der Beschreibung der Erfindung und/oder der Figurenbeschreibung zu ersetzen. Ferner kann dadurch ein Merkmal oder können eine Mehrzahl von Merkmalen in den Patentansprüchen ausgelegt, näher spezifiziert und/oder substituiert werden. - In den Figuren (Fig.) der Zeichnung zeigen:
- Fig. 1: in einer geschnittenen und teilweise weggebrochenen Seitenansicht zwei unterschiedliche Positionen eines Scheibenwischers für ein Kraftfahrzeug auf einer gestrichelt dargestellten Scheibe, wobei der Scheibenwischer eine Nickbewegung durchgeführt hat;
- Fig. 2: ebenfalls in einer geschnittenen und teilweise weggebrochenen Seitenansicht einen zwischen einem Antriebszapfen einer Wischeranlage des Kraftfahrzeugs und dem Scheibenwischer eingerichteten erfindungsgemäßen Verstellmechanismus;
- Fig. 3: eine Draufsicht auf eine Kurvenscheibe eines erfindungsgemäßen Kurvengetriebes für den Verstellmechanismus, mit einem profilierten Kragen, wobei ein maximier Wischwinkel des Scheibenwischers gegenüber der Kurvenscheibe dargestellt ist; und
- Fig. 4: die Kurvenscheibe aus der Fig. 3 in einer Seitenansicht, wobei der profilierte Kragen zu erkennen ist, an welchem ein Nickelement des Scheibenwischers angreift und zwei Positionen des Nickelements analog zur Fig. 1 dargestellt sind.

### Ausführungsformen der Erfindung

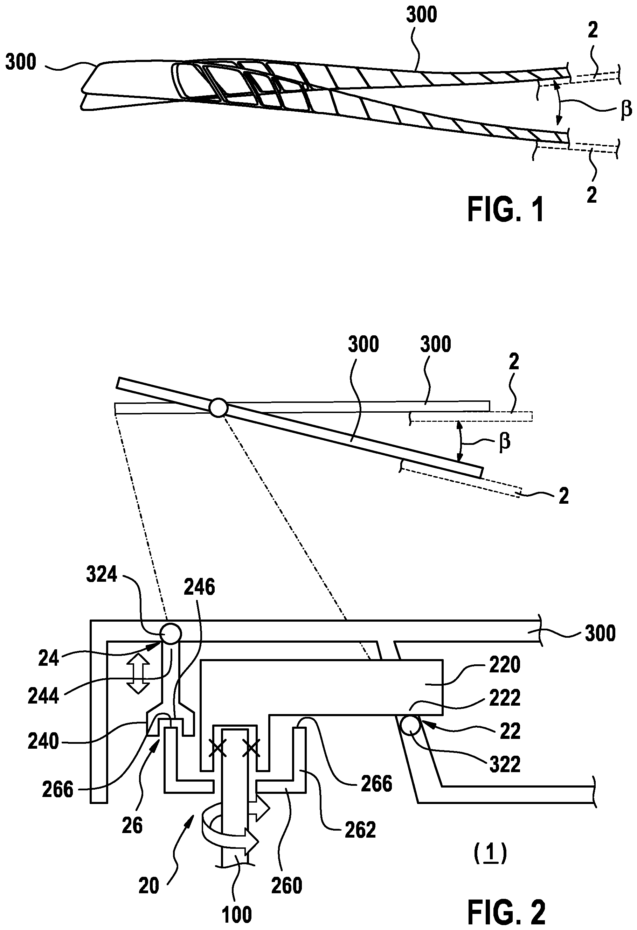

Die Erfindung ist im Folgenden anhand von Ausführungsbeispielen einer dargestellten Ausführungsform (Fig. 1 bis 4) einer Variante eines Verstellmechanismus, insbesondere eines Verkippmechanismus, näher erläutert. Die Erfindung ist jedoch nicht auf eine solche Variante und/oder die nachfolgend erläuterten Ausführungsbeispiele beschränkt, sondern ist von grundlegenderer Natur, sodass sie auf sämtliche Verstellmechanismen, insbesondere Verkippmechanismen, im Sinne der Erfindung angewendet werden kann. - Obwohl die Erfindung im Detail durch bevorzugte Ausführungsbeispiele näher beschrieben und illustriert ist, so ist die Erfindung nicht durch diese offenbarten Beispiele eingeschränkt. Andere Variationen können hieraus abgeleitet werden ohne den Schutzumfang der Erfindung zu verlassen.

Die Fig. 1 zeigt einen Scheibenwischer 300 für eine Scheibenwischeinrichtung 1 (vgl. Fig. 2) einer Heck- 2 oder Windschutzscheibe 2 eines Kraftfahrzeugs, wobei gemäß der Erfindung ein Scheibenwischer 300 für eine Heckscheibe 2 bevorzugt ist. Der Scheibenwischer 300 ist dabei bevorzugt ein mit einem Wischerblatt kombinierter Wischhebel bzw. Wischerarm mit bevorzugt einem Befestigungsabschnitt oder einer Nabe für einen Antriebszapfen 100 (vgl. Fig. 2). Der Scheibenwischer 300 kann auch als Wischerblatt, Wischhebel, Wischerarm etc. ausgebildet sein. Bevorzugt funktioniert der Scheibenwischer 300 bzw. ein Abschnitt des Scheibenwischers 300 zum Wischen der Scheibe 2 nach dem Fin-Ray-Prinzip. Die Scheibenwischeinrichtung 1 kann auch als Wischeranlage, 1, Wischersystem 1 oder ein Teil 1 bzw. ein Abschnitt 1 davon für ein Fortbewegungsmittel oder ein Fahrzeug ausgebildet sein.

Gemäß der Erfindung kann der Scheibenwischer 300 mittels eines erfindungsgemäßen Verstellmechanismus 20, insbesondere eines erfindungsgemäßen Verkippmechanismus 20, verstellt bzw. verkippt werden. Hierdurch kann der Scheibenwischer 300 eine Nickbewegung durchführen, vgl. einen Nick- β bzw. Einstellwinkel β des Scheibenwischers 300 in den Fig. 1 und 2. D. h. ein Druck des Scheibenwischers 300 auf die Scheibe 2 (in den Fig. 1 und 2 ist die Scheibe 2 der Übersichtlichkeit halber mitbewegt dargestellt) ist mittels des Verstellmechanismus 20 einstellbar, wofür der Scheibenwischer 300 durch den Verstellmechanismus 20 zu einem bestimmten Zeitpunkt einen bestimmten Weg auf die Scheibe 2 zubewegbar und zu einem bestimmten anderen Zeitpunkt, welcher von einem Wischwinkel α des Scheibenwischers 300 abhängt, einen bestimmten Weg von der Scheibe 2 wegbewegbar ist.

Der den Scheibenwischer 300 reversierend antreibbare Antriebszapfen 100 (Doppelpfeil am Antriebszapfen 100 in Fig. 2) ist z. B. ein von einer Schwinge angetriebener Antriebszapfen 100, ein (Längsend-)Abschnitt 100 einer Welle 100, wie z. B. einer Antriebswelle 100, einer Wischerwelle 100, einer Abtriebswelle 100 eines Getriebes oder eines Elektromotors. Damit eine Wisch- bzw. Schwingbewegung in den Scheibenwischer 300 eingeleitet werden kann, ist auf/an dem Antriebszapfen 100 ein Betätigungselement 220 für den Scheibenwischer 300 dreh- und bevorzugt auch axialfest montiert. Das Betätigungselement 220 greift innen in den Scheibenwischer 300 ein und überträgt eine vom Antriebszapfen 100 stammende, hin- und hergehende Schwingbewegung in eine hin- und hergehende Wischbewegung des Scheibenwischers 300.

Das Betätigungselement 220 ist für die Wischbewegung auf der Scheibe 2 nicht nur beidseitig im Scheibenwischer 300 gelagert (rechter Abschnitt des Betätigungselements 220 in der Fig. 2, wobei das Betätigungselement 220 im Scheibenwischer 300 in beide Richtungen eines translatorischen Freiheitsgrads gehemmt ist), sondern zwischen dem Scheibenwischer 300 und dem Betätigungselement 220 ist auch eine Nicklagerung 22, 322/222 ausgebildet, die z. B. als eine Zapfenlagerung 22, 322/222, eine Snap-fit-Lagerung, eine Schnapplagerung, ein Filmscharnier etc. ausgebildet sein kann. D. h. das Betätigungselement 220 hat zwei Hauptaufgaben; einerseits Aufnehmen der Schwingbewegung vom Antriebszapfen 100 und Weitergeben der Schwingbewegung in den Scheibenwischer 300 und andererseits dient sie als ein Widerlager für den Scheibenwischer 300, welcher sich bei einer Nickbewegung des Scheibenwischers 300 daran abstützt.

Die Nicklagerung 22, 322/222 ist bevorzugt eine Dreh- 22, 322/222 bzw. Gleitlagerung 22, 322/222, die eine, zwei oder drei translatorische Freiheitsgrade der Nicklagerung 22, 322/222 hemmt. Hierbei kann die Nicklagerung 22, 322/222 das Betätigungselement 220 in jeweils nur eine Richtung des entsprechenden translatorischen Freiheitsgrads hemmen, was in der Fig. 2 für einen einzigen translatorischen Freiheitsgrad dargestellt ist (das Betätigungselement 220 kann nach oben von der Nicklagerung 22, 322/222 abheben). Im dargestellten Ausführungsbeispiel ist die Nicklagerung 22, 322/222 aus einem Lager 322 bzw. einer Lagerfläche 322 des Scheibenwischers 300 und einem Gegenlager 222 bzw. einer Gegenlagerfläche 222 des Betätigungselements 220 gebildet. Vorliegend ist das Lager 322 als ein Zapfen 322 und das Gegenlager 222 als eine Lagerschale 222 ausgebildet. Dies kann natürlich auch umgekehrt ausgebildet sein.

Damit die Nickbewegung in den Scheibenwischer 300 eingeleitet werden kann, weist der Verstellmechanismus 20 ein Nickelement 240 für den Scheibenwischer 300 auf, mittels welchem in einem Zusammenspiel mit der Nicklagerung 22, 322/ 222 der Scheibenwischer 300 in Bezug auf die Scheibe 2 im Wesentlichen nickend bzw. rotatorisch auf- und abbewegt werden kann. Hierfür weist der Verstellmechanismus 20 zwischen dem Scheibenwischer 300 und dem Nickelement 240 eine Betätigungslagerung 24, 324/ 244 auf, die z. B. als eine Zapfenlagerung 24, 324/244, eine Snap-fit-Lagerung, eine Schnapplagerung, ein Filmscharnier etc. ausgebildet sein kann. Die Betätigungslagerung 24, 324/244 ist bevorzugt eine Dreh- 24, 324/244 bzw. Gleitlagerung 24, 324/244, die eine, zwei oder drei translatorische Freiheitsgrade der Betätigungslagerung 24, 324/244 hemmt. Hierbei kann die Betätigungslagerung 24, 324/244 das Nickelement 240 in jeweils nur eine Richtung des entsprechenden translatorischen Freiheitsgrads hemmen (vgl. oben und Fig. 2).

Im dargestellten Ausführungsbeispiel ist die Betätigungslagerung 24, 324/244 aus einem Lager 324 bzw. einer Lagerfläche 324 des Scheibenwischers 300 und einem Gegenlager 244 bzw. einer Gegenlagerfläche 244 des Nickelements 240 gebildet. Vorliegend ist das Lager 324 als ein Zapfen 324 und das Gegenlager 244 als eine Lagerschale 244 ausgebildet. Dies kann natürlich auch umgekehrt ausgebildet sein. - Die durch das Nickelement 240 über die Nicklagerung 22 in den Scheibenwischer 300 einleitbare Nickbewegung stammt von einem Getriebe 26, 240/260, 246/266, von dem das Nickelement 240 ein Teil ist. Das Getriebe 26, 240/260, 246/266 ist bevorzugt als ein Kurvengetriebe 26, 240/260, 246/ 266 oder ein Kulissengetriebe ausgebildet.

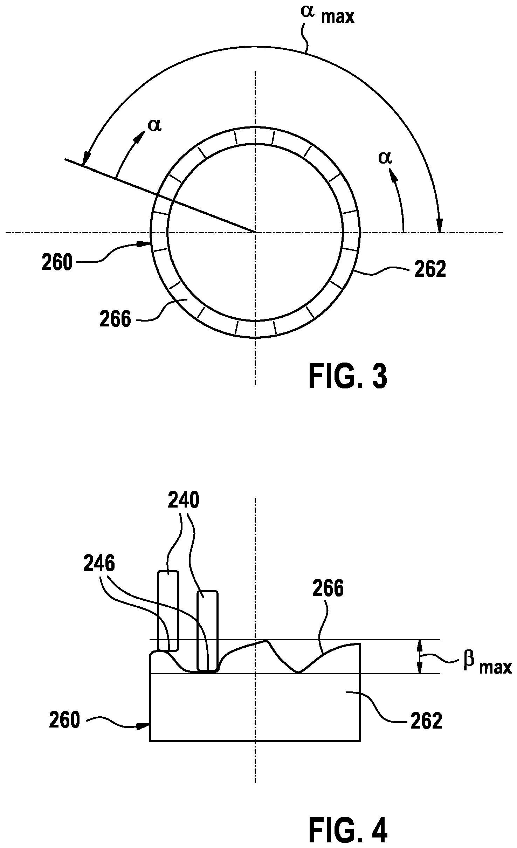

Vorliegend ist das Getriebe 26, 240/260, 246/266 als Kurvengetriebe 26, 240/ 260, 246/266 ausgebildet. Hierbei tastet oder greift das Nickelement 240 eine profilierte Betätigungsbahn 266 einer Kurvenscheibe 260 ab. D. h. ein Hebel 246 bzw. eine Hebelfläche 246 oder ein Abtaster 246 bzw. eine Abtasterfläche 246 des Nickelements 240 tastet oder greift die Betätigungsbahn 266 ab (vgl. Fig. 4), wobei die betreffende Fläche 246 bevorzugt abgerundet ist. Hierfür kann auch ein Tastrad, ein Greifer, ein Vorsprung etc. angewendet werden. - Für den Fall eines Kulissengetriebes bzw. einer Kulissensteuerung ist die Betätigungsbahn 266 durch eine Kulissenbahn und das Nickelement 240 ggf. teilweise durch einen Kulissenstein, einen Kulissengreifer, einen Kulissentaster etc. ersetzt. Ferner ist dabei die Kurvenscheibe 260 durch eine Kulisse ersetzt.

Die Kurvenscheibe 260 ist bevorzugt fahrzeugfest montiert und befindet sich bevorzugt auf dem Antriebszapfen 100, wobei sich der Antriebszapfen 100 gegenüber der Kurvenscheibe 260 verdrehen kann. Die Kurvenscheibe 260 kann natürlich auch abseits des Antriebszapfens 100 montiert sein. Die Kurvenscheibe 260 ist vorliegend als eine Kragenscheibe 260 (u-förmige Querschnitte) mit einem Kragen 262 ausgebildet, der an seinem freien Ende die Betätigungsbahn 266 aufweist (siehe Fig. 3 und 4). - In einem Betrieb des Scheibenwischers 300 tastet oder greift das schwenkende (und sich durch die Betätigungsbahn 266 auf- und abbewegende) Nickelement 240 mit einem Abschnitt, insbesondere einem Längsendabschnitt, die relativ dazu ruhende profilierte Betätigungsbahn 266 ab und vermittelt die abgegriffene Information mit einem anderen Abschnitt, insbesondere einem Längende, an den Scheibenwischer 300.

Die Betätigungsbahn 266 ist derart profiliert, dass in Abhängigkeit des Wischwinkels α eine unterschiedliche Nickstellung des Scheibenwischers 300 einstellbar ist, was am in der Fig. 4 zu sehenden Profil des Kragens 262 gut zu erkennen ist. Hierdurch kann eine Schleierbildung auf der Scheibe 2 wirksam vermieden werden. Ferner können vormals nicht wischbare Bereiche, welche eigentlich durch den Scheibenwischer 300 wischbar wären, nun gewischt werden. Eine Profilierung der Betätigungsbahn 266 hängt von einer Krümmung bzw. einem Krümmungsverlauf der Scheibe 2 ab. Die Betätigungsbahn 266 erstreckt sich wenigstens derart weit in eine Umfangsrichtung des Kragens 262, wie ein maximaler Wischwinkel αₘₐₓ in Umfangsrichtung umläuft. Ferner zeigt die Fig. 4 einen maximalen Nickwinkel βₘₐₓ.

## Patentansprüche

1. Verstellmechanismus, insbesondere Verkippmechanismus (20), für eine Wischeranlage (1) oder Scheibenwischeinrichtung (1) eines Fortbewegungsmittels oder Fahrzeugs, insbesondere für eine Heck- (2) oder Windschutzscheibe (2) eines Kraftfahrzeugs, mit einem von einem Antriebszapfen (100) antreibbaren Scheibenwischer (300), wobei
der Verstellmechanismus (20) in einem verbauten Zustand des Scheibenwischers (300) zwischen dem Antriebszapfen (100) und dem Scheibenwischer (300) eingerichtet ist, wobei mittels des Verstellmechanismus (20) auf einer Scheibe (2) ein Nickwinkel (β) des Scheibenwischers (300) einstellbar ist, **dadurch gekennzeichnet, dass** der Verstellmechanismus (20) eine Betätigungslagerung (24) aufweist, mittels welcher die Nickbewegung des Scheibenwischers (300) auf der Scheibe (2) durchführbar ist, wobei
die Betätigungslagerung (24) in Abhängigkeit des Wischwinkels (α) bevorzugt mit dem Scheibenwischer (300) mitbewegbar ausgebildet ist und die Betätigungslagerung (24) ein Lager (324) am/im Scheibenwischer (300) und ein Gegenlager (244) an/in einem Nickelement (240) des Scheibenwischers (300) aufweist.

2. Verstellmechanismus gemäß vorhergehendem Anspruch, **dadurch gekennzeichnet, dass** der Verstellmechanismus (20) ein Getriebe (26), insbesondere ein Kurvengetriebe (26) oder ein Kulissengetriebe (26), aufweist, mittels welchem in Abhängigkeit eines Wischwinkels (α) des Scheibenwischers (300) eine Nickbewegung des Scheibenwischers (300) auf der Scheibe (2) durchführbar ist.

3. Verstellmechanismus gemäß einem der vorhergehenden Ansprüche, **dadurch gekennzeichnet, dass** der Verstellmechanismus (20) eine Nicklagerung (22) aufweist, mittels welcher die Nickbewegung des Scheibenwischers (300) auf der Scheibe (2) durchführbar ist, wobei
die Nicklagerung (22) in Abhängigkeit des Wischwinkels (α) bevorzugt mit dem Scheibenwischer (300) mitbewegbar ausgebildet ist und die Nicklagerung (22) ein Lager (322) am/im Scheibenwischer (300) und ein Gegenlager (222) an/in einem Betätigungselement (220) des Scheibenwischers (300) aufweist.

4. Verstellmechanismus gemäß Anspruch 3, **dadurch gekennzeichnet, dass** die Nickbewegung des Scheibenwischers (300) mittels der Betätigungslagerung (24) in einem Zusammenwirken mit der Nicklagerung (22) durchführbar ist, und
der Scheibenwischer (300) bevorzugt mittels des Nickelements (240) gegenüber dem Betätigungselement (220) verschwenkbar ist, wobei der Scheibenwischer (300) in eine Richtung auf die Scheibe (2) zubewegbar und in eine entgegengesetzte Richtung wieder zurückbewegbar ist.

5. Verstellmechanismus gemäß einem der vorhergehenden Ansprüche, **dadurch gekennzeichnet, dass** der Verstellmechanismus (20) ferner eine mit dem Nickelement (240) zusammenwirkbare Kurvenscheibe (260) mit einer Betätigungsbahn (266) für das Nickelement (240) aufweist, wobei
in einem Betrieb des Scheibenwischers (300) durch ein Abtasten der Betätigungsbahn (266) mittels des Nickelements (240), insbesondere mittels einer Abtastfläche (246) des Nickelements (240), die Nickbewegung in den Scheibenwischer (300) einbringbar ist.

6. Verstellmechanismus gemäß Anspruch 5, **dadurch gekennzeichnet, dass** die Kurvenscheibe (260) wenigstens für einen Bereich eines maximalen Wischwinkels (αₘₐₓ) des Scheibenwischers (300) einen Kragen (262) aufweist, welcher an seinem freien Ende die Betätigungsbahn (266) für das Nickelement (240) aufweist, und/oder
die Kurvenscheibe (260) derart ausgestaltet ist, dass die Kurvenscheibe (260) einerseits auf dem Antriebszapfen (100) und drehbar gegenüber dem Antriebszapfen (100) vorsehbar und/oder andererseits drehfest mit dem Fortbewegungsmittel oder Fahrzeug verbindbar ist.

7. Verstellmechanismus gemäß Anspruch 3, **dadurch gekennzeichnet, dass** die Nicklagerung (22) als eine Zapfenlagerung (22), eine Snap-fit-Lagerung, eine Schnapplagerung oder ein Filmscharnier ausgebildet ist, und/oder
die Betätigungslagerung (24) als eine Zapfenlagerung (24), eine Snap-fit-Lagerung, eine Schnapplagerung oder ein Filmscharnier ausgebildet ist

8. Verstellmechanismus gemäß Anspruch 3, **dadurch gekennzeichnet, dass** die Nicklagerung (22) ein Lager (322), insbesondere einen Zapfen (322), am/im Scheibenwischer (300) und ein Gegenlager (222), insbesondere eine Lagerschale (222), am/im Betätigungselement (220) aufweist, und/oder
die Betätigungslagerung (24) ein Lager (324), insbesondere einen Zapfen (324), am/im Scheibenwischer (300) und ein Gegenlager (244), insbesondere eine Lagerschale (244), am/im Nickelement (240) aufweist.

9. Verstellmechanismus gemäß Ansprüche 3 und 5, **dadurch gekennzeichnet, dass**:
• der Verstellmechanismus (20) als Befestigung des Scheibenwischers (300) an/auf dem Antriebszapfen (100) dient
• der Scheibenwischer (300) als ein Fin-Ray-Scheibenwischer (300) ausgebildet ist;
• der Scheibenwischer (300) ein Wischerblatt, einen Wischerarm und/oder einen Wischhebel umfasst;
• der Scheibenwischer (300) als ein mit einem Wischerblatt kombinierter Wischhebel bzw. Wischerarm ausgebildet ist;
• der Antriebszapfen (100) als ein Abschnitt, insbesondere ein Längsendabschnitt einer Welle (100) ausgebildet ist;
• das Betätigungselement (220) mit dem Antriebszapfen (100) drehfest und/o der axialfest verbindbar ist;
• mittels der Betätigungsbahn (266) das Nickelement (240) auf- und abbewegbar ausgestaltet ist; und/oder
• zwischen dem Scheibenwischer (300) und dem Betätigungselement (220) eine Feder, insbesondere eine Zugfeder, vorgesehen ist.

10. Wischeranlage oder Scheibenwischeinrichtung für ein Fortbewegungsmittel oder ein Fahrzeug, insbesondere für eine Heck- oder Windschutzscheibe eines Kraftfahrzeugs, **dadurch gekennzeichnet, dass**
die Wischeranlage (1) oder die Scheibenwischeinrichtung (1) einen Verstellmechanismus (20), insbesondere einen Verkippmechanismus (20), nach einem der Ansprüche 1 bis 9 aufweist.

## Claims

1. Adjustment mechanism, in particular tilting mechanism (20), for a wiper system (1) or windscreen wiper device (1) of a means of transportation or vehicle, in particular for a rear window (2) or windscreen (2) of a motor vehicle, having a windscreen wiper (300) which can be driven by a drive journal (100), wherein
the adjustment mechanism (20) is arranged between the drive journal (100) and the windscreen wiper (300) in an assembled state of the windscreen wiper (300), wherein a tilting angle (β) of the windscreen wiper (300) can be set on a window (2) by means of the adjustment mechanism (20), **characterized in that** the adjustment mechanism (20) has an actuating mounting (24) by means of which the tilting movement of the windscreen wiper (300) can be carried out on the window (2), wherein
the actuating mounting (24) is designed to be movable preferably together with the windscreen wiper (300) depending on the wiping angle (α), and the actuating mounting (24) has a bearing (324) on/in the windscreen wiper (300) and a counterbearing (244) on/in a tilting element (240) of the windscreen wiper (300).

2. Adjustment mechanism according to the preceding claim, **characterized in that** the adjustment mechanism (20) has a gear (26), in particular a cam gear (26) or a gate-type gear (26), by means of which a tilting movement of the windscreen wiper (300) can be carried out on the window (2) depending on a wiping angle (α) of the windscreen wiper (300).

3. Adjustment mechanism according to either of the preceding claims, **characterized in that** the adjustment mechanism (20) has a tilting mounting (22) by means of which the tilting movement of the windscreen wiper (300) can be carried out on the window (2), wherein
the tilting mounting (22) is designed to be movable preferably together with the windscreen wiper (300) depending on the wiping angle (α), and the tilting mounting (22) has a bearing (322) on/in the windscreen wiper (300) and a counterbearing (222) on/in an actuating element (220) of the windscreen wiper (300).

4. Adjustment mechanism according to Claim 3, **characterized in that** the tilting movement of the windscreen wiper (300) can be carried out by means of the actuating mounting (24) in interaction with the tilting mounting (22), and
the windscreen wiper (300) can be pivoted in relation to the actuating element (220) preferably by means of the tilting element (240), wherein the windscreen wiper (300) can be moved in a direction towards the window (2) and can be moved back again in an opposite direction.

5. Adjustment mechanism according to one of the preceding claims, **characterized in that** the adjustment mechanism (20) furthermore has a cam disc (260) which can interact with the tilting element (240) and which has an actuating track (266) for the tilting element (240), wherein,
during operation of the windscreen wiper (300), the tilting movement can be introduced into the windscreen wiper (300) by sensing of the actuating track (266) by means of the tilting element (240), in particular by means of a sensing surface (246) of the tilting element (240).

6. Adjustment mechanism according to Claim 5, **characterized in that** the cam disc (260) has a collar (262) at least for a region of a maximum wiping angle (αₘₐₓ) of the windscreen wiper (300), said collar having, at its free end, the actuating track (266) for the tilting element (240), and/or
the cam disc (260) is configured in such a manner that the cam disc (260) firstly can be provided on the drive journal (100) and so as to be rotatable in relation to the drive journal (100) and/or secondly can be connected to the means of transportation or vehicle in a rotationally fixed manner.

7. Adjustment mechanism according to Claim 3, **characterized in that** the tilting mounting (22) is designed as a journal mounting (22), a snap-fit mounting, a snap mounting or a film hinge, and/or
the actuating mounting (24) is designed as a journal mounting (24), a snap-fit mounting, a snap mounting or a film hinge.

8. Adjustment mechanism according to Claim 3, **characterized in that** the tilting mounting (22) has a bearing (322), in particular a journal (322), on/in the windscreen wiper (300) and a counterbearing (222), in particular a bearing shell (222), on/in the actuating element (220), and/or
the actuating mounting (24) has a bearing (324), in particular a journal (324), on/in the windscreen wiper (300) and a counterbearing (244), in particular a bearing shell (244), on/in the tilting element (240).

9. Adjustment mechanism according to Claims 3 and 5, **characterized in that**:
• the adjustment mechanism (20) serves as a fastening of the windscreen wiper (300) to/on the drive journal (100);
• the windscreen wiper (300) is designed as a fin-ray windscreen wiper (300);
• the windscreen wiper (300) comprises a wiper blade, a wiper arm and/or a wiper lever;
• the windscreen wiper (300) is designed as a wiper lever or wiper arm which is combined with a wiper blade;
• the drive journal (100) is designed as a portion, in particular a longitudinal end portion, of a shaft (100);
• the actuating element (220) can be connected to the drive journal (100) in a rotationally fixed and/or axially fixed manner;
• the tilting element (240) is configured so as to be movable up and down by means of the actuating track (266); and/or
• a spring, in particular a tension spring, is provided between the windscreen wiper (300) and the actuating element (220).

10. Wiper system or windscreen wiper device for a means of transportation or a vehicle, in particular for a rear window or windscreen of a motor vehicle, **characterized in that** the wiper system (1) or the windscreen wiper device (1) has an adjustment mechanism (20), in particular a titling mechanism (20), according to one of Claims 1 to 9.

## Revendications

1. Mécanisme de réglage, notamment mécanisme de basculement (20), destiné à un système d'essuie-glace (1) ou un dispositif d'essuie-glace (1) d'un moyen de locomotion ou d'un véhicule, en particulier à un pare-brise (2) ou une lunette arrière (2) d'un véhicule automobile, comprenant un essuie-glace (300) pouvant être entraîné par une broche d'entraînement (100),
le mécanisme de réglage (20) étant disposé, lorsque l'essuie-glace (300) est installé, entre la broche d'entraînement (100) et l'essuie-glace (300), un angle d'inclinaison (β) de l'essuie-glace (300) pouvant être réglé au moyen du mécanisme de réglage (20) situé sur une vitre (2), **caractérisé en ce que** le mécanisme de réglage (20) comporte un ensemble de paliers d'actionnement (24) permettant à l'essuie-glace (300) d'effectuer le mouvement d'inclinaison sur la vitre (2),
l'ensemble de paliers d'actionnement (24) étant conçu pour être déplaçable, de préférence conjointement avec l'essuie-glace (300), en fonction de l'angle d'essuyage (α) et l'ensemble de paliers d'actionnement (24) comportant un palier (324) sur/dans l'essuie-glace (300) et un palier-support (244) sur/dans un élément d'inclinaison (240) de l'essuie-glace (300).

2. Mécanisme de réglage selon la revendication précédente, **caractérisé en ce que** le mécanisme de réglage (20) comprend un organe de commande (26), en particulier une commande de came (26) ou une commande à coulisse (26), qui permet à l'essuie-glace (300) d'effectuer un mouvement d'inclinaison sur la vitre (2) en fonction de l'angle de balayage (α) de l'essuie-glace (300).

3. Mécanisme de réglage selon l'une des revendications précédentes, **caractérisé en ce que** le mécanisme de réglage (20) comporte un ensemble de paliers d'inclinaison (22) qui permet à l'essuie-glace (300) d'effectuer le mouvement d'inclinaison sur la vitre (2),
l'ensemble de paliers d'inclinaison (22) étant conçu pour être déplaçable, de préférence conjointement avec l'essuie-glace (300), en fonction de l'angle de balayage (α) et l'ensemble de paliers d'inclinaison (22) comportant un palier (322) sur/dans l'essuie-glace (300) et un palier-support (222) sur/dans un élément d'actionnement (220) de l'essuie-glace (300).

4. Mécanisme de réglage selon la revendication 3, **caractérisé en ce que** le mouvement d'inclinaison de l'essuie-glace (300) peut être effectué au moyen de l'ensemble de paliers d'actionnement (24) en coopération avec l'ensemble de paliers d'inclinaison (22), et
l'essuie-glace (300) peut pivoter par rapport à l'élément d'actionnement (220) de préférence au moyen de l'élément d'inclinaison (240), l'essuie-glace (300) étant déplacé en direction de la vitre (2) et reculé dans la direction opposée.

5. Mécanisme de réglage selon l'une des revendications précédentes, **caractérisé en ce que** le mécanisme de réglage (20) comprend en outre une came (260) pouvant coopérer avec l'élément d'inclinaison (240) et comportant une piste d'actionnement (266) destinée à l'élément d'inclinaison (240),
le mouvement d'inclinaison pouvant être communiqué à l'essuie-glace (300) lors du fonctionnement de l'essuie-glace (300) par balayage de la piste d'actionnement (266) au moyen de l'élément d'inclinaison (240), en particulier au moyen d'une surface de balayage (246) de l'élément d'inclinaison (240) .

6. Mécanisme de réglage selon la revendication 5, **caractérisé en ce que** la came (260) comporte, au moins pour une plage d'angle de balayage maximal (αₘₐₓ) de l'essuie-glace (300), un rebord (262) qui comporte à son extrémité libre la piste d'actionnement (266) destiné à l'élément d'inclinaison (240), et/ou
la came (260) est conçue de telle sorte que la came (260) puisse d'une part être prévue sur la broche d'entraînement (100) et de manière à pouvoir tourner par rapport à la broche d'entraînement (100) et/ou puisse d'autre part être reliée solidairement en rotation au moyen de locomotion ou au véhicule.

7. Mécanisme de réglage selon la revendication 3, **caractérisé en ce que** l'ensemble de paliers d'inclinaison (22) est conçu comme un ensemble de paliers à tourillon (22), un ensemble de paliers à encliquetage, un ensemble de paliers à enclenchement ou une charnière à film, et/ou
l'ensemble de paliers d'actionnement (24) est conçu comme un ensemble de paliers à tourillon (24), un ensemble de paliers à encliquetage, un ensemble de paliers à enclenchement ou une charnière à film.

8. Mécanisme de réglage selon la revendication 3, **caractérisé en ce que** l'ensemble de paliers d'inclinaison (22) comporte un palier (322), en particulier un tourillon (322) sur/dans l'essuie-glace (300) et un palier-support (222), en particulier un coussinet (222) sur/dans l'élément d'actionnement (220), et/ou
l'ensemble de paliers d'actionnement (24) comporte un palier (324), en particulier un tourillon (324), sur/dans l'essuie-glace (300) et un palier-support (244), en particulier un coussinet (244), sur/dans l'élément en nickel (240).

9. Mécanisme de réglage selon les revendications 3 et 5, **caractérisé en ce que** :
• le mécanisme de réglage (20) sert à fixer l'essuie-glace (300) à/sur la broche d'entraînement (100) ;
• l'essuie-glace (300) est conçu comme un essuie-glace Fin-Ray (300) ;
• l'essuie-glace (300) comprend un balai d'essuie-glace, un bras d'essuie-glace et/ou un levier d'essuie-glace ;
• l'essuie-glace (300) est conçu comme un levier ou un bras d'essuie-glace combiné à un balai d'essuie-glace ;
• la broche d'entraînement (100) est conçue comme une partie, en particulier une partie d'extrémité longitudinale d'un arbre (100) ;
• l'élément d'actionnement (220) peut être relié à la broche d'entraînement (100) solidaire en rotation et/ou de manière fixe axialement ;
• l'élément d'inclinaison (240) est conçu de manière à pouvoir être monté et descendu au moyen de la piste d'actionnement (266) ; et/ou
• un ressort, en particulier un ressort de traction, est prévu entre l'essuie-glace (300) et l'élément d'actionnement (220).

10. Système d'essuie-glace ou dispositif d'essuie-glace destiné à un moyen de locomotion ou un véhicule, en particulier à un pare-brise ou une lunette arrière d'un véhicule automobile, **caractérisé en ce que**
le système d'essuie-glace (1) ou le dispositif d'essuie-glace (1) comporte un mécanisme de réglage (20), en particulier un mécanisme de basculement (20), selon l'une des revendications 1 à 9.
